# EUROPÄISCHE PATENTSCHRIFT

(11) **EP 3 669 562 B1**
(45) Veröffentlichungstag und Bekanntmachung des Hinweises auf die Patenterteilung: **26.10.2022**
(21) Anmeldenummer: 18762763.3
(22) Anmeldetag: 16.08.2018
(51) Int. Cl.: H04W 8/26, H04W 12/0431, H04W 12/30, H04W 8/18, H04W 12/06, H04W 12/40

(54) **VERFAHREN ZUR INBETRIEBNAHME UND PERSONALISIERUNG EINES TEILNEHMERIDENTITÄTSMODULS**
METHOD FOR STARTING UP AND PERSONALIZING A SUBSCRIBER IDENTITY MODULE
PROCÉDÉ DE MISE EN SERVICE ET DE PERSONNALISATION D'UN MODULE D'IDENTITÉ DE PARTICIPANT

(30) Priorität: 17.08.2017 DE 102017007790
(43) Veröffentlichungstag der Anmeldung: 24.06.2020
(73) Patentinhaber: Giesecke+Devrient Mobile Security GmbH, 81677 München (DE)
(72) Erfinder: HOFFMANN, Lars, 80639 München (DE)
(74) Vertreter: Giesecke + Devrient IP
(86) Internationale Anmeldenummer: PCT/EP2018/000402
(87) Internationale Veröffentlichungsnummer: WO 2019/034282

(56) Entgegenhaltungen:
- EP-A1- 2 536 186
- WO-A1-2009/141035
- US-A1- 2015 181 024
- US-A1- 2016 174 069

## Beschreibung

### Gebiet der Erfindung

Die Erfindung betrifft ein Verfahren zur Inbetriebnahme und Personalisierung eines Teilnehmeridentitätsmoduls in einem Mobilfunknetz, bei dem das Teilnehmeridentitätsmodul vor seiner erstmaligen Inbetriebnahme im Mobilfunknetz noch keinen individuellen, eindeutigen Parameterdatensatz, umfassend zumindest eine individuelle Teilnehmeridentifikation und einen individuellen Geheimschlüssel, enthält, und erst nach seiner erstmaligen Inbetriebnahme im Mobilfunknetz mit einem individuellen, eindeutigen Parameterdatensatz endgültiger Identifizierungs- und Authentisierungsparameter ausgestattet wird.

### Stand der Technik

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten - oder gleichbedeutend Mobilfunkendgeräten - zählen die Smartphones und Mobiltelefone. Zu mobilfunkfähigen Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Zur Nutzung eines mobilfunkfähigen Endgeräts, wie Smartphones oder Mobiltelefons, in einem Mobilfunknetzwerk eines Netzbetreibers enthält das Endgerät ein Teilnehmeridentitätsmodul mit einem Subskriptions-Profil oder kurz Profil. Das Profil bewerkstelligt die Konfiguration des Endgeräts und der Verbindung des Endgeräts im Mobilfunknetz. Das Profil umfasst einen individuellen Parameterdatensatz, der den Aufbau, Betrieb und Abbau einer Verbindung des Endgeräts im Mobilfunknetzwerk ermöglicht, und umfasst beispielsweise einen kryptographischen Authentisierungs-Schlüssel - auch Geheimschlüssel genannt - Ki und eine individuelle International Mobile Subscriber Identity - zu Deutsch Teilnehmeridentifikation - IMSI.

Das Teilnehmeridentitätsmodul kann unterschiedliche Formfaktoren haben, insbesondere Plug-In, Embedded, Integrated und Software. Teilnehmeridentitätsmodule vom Formfaktor Plug-In und Embedded sind auf einem dezidierten, eigenen Chip oder SoC (System-on-Chip) angeordnet. Beispiele für Plug-Ins sind SIM-Karte (SIM = Subscriber Identity Module) oder USIM-Karte (Universal SIM) oder UICC (Universal Integrated Circuit Card).

Die Infrastruktur eines Mobilfunk-Netzbetreibers umfasst eine Vielzahl von Servern, nachfolgend im Allgemeinen als Mobilfunkserver bezeichnet. Die Mobilfunkserver umfassen in funktionaler Hinsicht Produktionsserver, die bei der Produktion von Teilnehmeridentitätsmodulen verwendet werden, z.B. Personalisierungsserver und andere Produktionsserver, um Teilnehmeridentitätsmodule in der Produktion zu personalisieren. Solche Produktionsserver (auch Personalisierungsserver) können unter Verwaltung einer anderen Partei stehen, z.B. eines SIM-Karten-Herstellers. Die Mobilfunkserver umfassen weiter Betriebs- und Provisionierungs-Server, die verwendet werden, wenn ein Teilnehmeridentitätsmodul bereits im Einsatz im Feld ist bei einem Kunden, z.B. einem Endkunden oder Nutzer eines Mobilfunkendgeräts (z.B. Smartphones). Betriebs-Server werden beispielsweise für den Normalbetrieb wie z.B. Telefonate verwendet. Provisionierungs-Server werden verwendet, um in bereits im Feld befindliche Teilnehmeridentitätsmodule Daten zu senden, beispielsweise bei Erstinbetriebnahme eines Teilnehmeridentitätsmoduls, oder auch später.

Bei einem bekannten Verfahren zur Personalisierung eines Teilnehmeridentitätsmoduls wird bereits in der Produktion des Teilnehmeridentitätsmoduls ein individueller Parameterdatensatz, umfassend insbesondere eine individuelle Teilnehmeridentifikation IMSI und einen individuellen kryptographischen Geheimschlüssel (Authentisierungs-Schlüssel ) Ki, von einem Personalisierungsserver in das Teilnehmeridentitätsmodul einprogrammiert. Korrekt vergebene Teilnehmeridentifikationen IMSI und Geheimschlüssel Ki werden beim Mobilfunkserver registriert. Meldet sich in diesem System ein Teilnehmeridentitätsmodul mit einer nicht registrierten Teilnehmeridentifikation IMSI beim Mobilfunkserver, wird die Meldung nicht akzeptiert. Für eine Vielzahl von Teilnehmeridentitätsmodulen ist erforderlich, dass der Mobilfunkserver eine Vielzahl von Teilnehmeridentifikation IMSI auf Vorrat registriert, selbst wenn die Teilnehmeridentitätsmodule, die den Teilnehmeridentifikationen IMSI entsprechen, noch nicht in Betrieb sind.

Das Dokument WO 2009/141035 A1 (mit Familienmitgliedern EP2283666B1 und US8571537B2) aus dem Stand der Technik offenbart ein Verfahren zur Inbetriebnahme und Personalisierung eines Teilnehmeridentitätsmoduls (dort Teilnehmeridentifizierungsmodul genannt) in einem Mobilfunknetz, bei dem eine Vielzahl von Teilnehmeridentitätsmodulen vor einer ersten Inbetriebnahme mit identischen, nichtindividuellen, nicht eindeutigen generischen, initialen Parameterdatensätzen initialer Identifizierungs- und Authentisierungsparameter ausgerüstet sind, die zumindest eine nicht-individuelle und vorläufige Teilnehmeridentifikation IMSI und einen nicht-individuellen und provisorischen Geheimschlüssel Ki enthalten. Gemäß der Lösung aus WO 2009/141035 A1 wird eine Personalisierung eines Teilnehmeridentitätsmoduls erst nach bzw. anlässlich seiner ersten Inbetriebnahme durchgeführt. Hierbei wird ein individueller und endgültiger Teilnehmerdatensatz übertragen und auf dem Teilnehmeridentitätsmodul gespeichert. Dieser enthält eine eindeutige endgültige Teilnehmeridentifikation IMSI und den nun eigenen, individuellen Geheimschlüssel des Teilnehmeridentitätsmoduls.

Das Dokument US8571537B2 aus dem Stand der Technik schlägt ein ähnliches Verfahren zur Inbetriebnahme und Personalisierung eines Teilnehmeridentitätsmoduls vor wie EP2283666B1 aus derselben Patentfamilie. Bei der Lösung aus US8571537B2 wird ebenfalls mit einer Vielzahl von Teilnehmeridentitätsmodulen mit identischen, nichtindividuellen, nicht eindeutigen generischen, initialen Parameterdatensätzen begonnen.

Bei der Lösung aus WO 2009/141035 A1 wird bei der Produktion der Teilnehmeridentitätsmodule in jedes Teilnehmeridentitätsmodul ein- und derselbe generische, initiale Parameterdatensatz einprogrammiert. Im Unterschied zu Verfahren, bei denen in jedes Teilnehmeridentitätsmodul bereits in der Produktion ein individueller Parameterdatensatz einprogrammiert wird, entfällt beim Verfahren aus WO 2009/141035 A1 bei der Programmierung eines einzelnen Teilnehmeridentitätsmoduls das stets erneute Erzeugen und Bereitstellen eines individuellen Parameterdatensatzes. Hierdurch kann die Produktion der Teilnehmeridentitätsmodule beschleunigt erfolgen.

Werden allerdings mehr oder andere Teilnehmeridentitätsmodule als eigentlich vorgesehen mit dem nichtindividuellen initialen Parameterdatensatz programmiert, so sind auch diese Teilnehmeridentitätsmodule mit gültigen initialen Parameterdatensätzen ausgestattet, die es ihnen ermöglichen können, endgültige individuelle Parameterdatensätze abzurufen. Für Teilnehmeridentitätsmodule, in die bereits in der Produktion ein individueller Parameterdatensatz programmiert wird, besteht diese Gefahr nicht. Teilnehmeridentitätsmodule, die bereits in der Produktion mit einem individuellen Parameterdatensatz programmiert werden, sind somit in der beschriebenen Hinsicht sicherer, mit dem Preis einer langsameren Produktion.

### Zusammenfassung der Erfindung

Der Erfindung liegt die Aufgabe zu Grunde, ein Verfahren zur Inbetriebnahme und Personalisierung von Teilnehmeridentitätsmodulen zu schaffen, das sowohl eine möglichst effiziente Produktion der Teilnehmeridentitätsmodule ermöglicht, als auch möglichst hohe Sicherheit bietet.

Die Aufgabe wird gelöst durch ein Verfahren nach Anspruch 1. Vorteilhafte Ausgestaltungen der Erfindung sind in abhängigen Ansprüchen angegeben.

Das Verfahren nach Anspruch 1 ist zur Inbetriebnahme und Personalisierung eines Teilnehmeridentitätsmoduls in einem Mobilfunknetz eingerichtet. Das Teilnehmeridentitätsmodul hat vor seiner erstmaligen Inbetriebnahme im Mobilfunknetz noch keinen individuellen, eindeutigen Parameterdatensatz. Ein solcher individueller, eindeutiger Parameterdatensatz umfasst zumindest eine individuelle Teilnehmeridentifikation IMSI und einen individuellen Geheimschlüssel Ki. Das Teilnehmeridentitätsmodul wird erst nach oder anlässlich seiner erstmaligen Inbetriebnahme (durch einen Kunden, der das Teilnehmeridentitätsmodul erworben hat) im Mobilfunknetz mit einem individuellen, eindeutigen Parameterdatensatz ausgestattet. Erst der individuelle, eindeutige Parameterdatensatz, umfassend eine individuelle Teilnehmeridentifikation IMSI und einen individuellen Geheimschlüssel Ki, ermöglicht einen dauerhaften Betrieb eines Mobilfunkendgeräts, in dem das Teilnehmeridentitätsmodul betrieben wird, in einem Mobilfunknetz.

Das Verfahren ist gekennzeichnet durch die Schritte:
a) Bereitstellen eines Teilnehmeridentitätsmoduls, das einen vorläufigen Parameterdatensatz enthält, der umfasst:
   a1) eine für das Teilnehmeridentitätsmodul individuelle, eindeutige Teilnehmeridentifikation, und
   a2) einen für eine Vielzahl von Teilnehmeridentitätsmodulen identischen, nicht-individuellen, nicht-eindeutigen vorläufigen Geheimschlüssel;
b) Bereitstellen eines Mobilfunkservers, der über den nicht-individuellen, nicht-eindeutigen vorläufigen Geheimschlüssel verfügt, und beim Mobilfunkserver Durchführen der Schritte:
   b1) Entgegennehmen einer mit der individuellen, eindeutigen Teilnehmeridentifikation und dem nicht-individuellen, nicht-eindeutigen vorläufigen Geheimschlüssel gebildeten Authentisierungs-Nachricht von dem Teilnehmeridentitätsmodul;
   b2) in Reaktion auf die Entgegennahme der Authentisierungs-Nachricht, Verifizieren der Authentisierungs-Nachricht gemäß vorbestimmten Kriterien, und im Fall erfolgreicher Authentisierung, Senden eines individuellen, eindeutigen endgültigen Geheimschlüssels an das Teilnehmeridentitätsmodul, zur Programmierung in das Teilnehmeridentitätsmodul.

Das Verfahren hat gegenüber Teilnehmeridentitätsmodulen, die bereits in der Produktion vollständig mit einer individuellen Teilnehmeridentifikation IMSI und einem individuellen Geheimschlüssel Ki personalisiert werden, den Vorteil, dass in der Produktion in alle Teilnehmeridentitätsmodule einer betrachteten Charge oder Gruppe ein- und derselbe Geheimschlüssel programmiert werden kann, ohne individuelle Programmierung der einzelnen Teilnehmeridentitätsmodule mit einem individuellen Geheimschlüssel. Dies erlaubt eine beschleunigte Produktion der Teilnehmeridentitätsmodule. Zudem ist die Verwaltung von Geheimschlüsseln vereinfacht, da es zunächst nur einen einzigen generischen nicht-individuellen Geheimschlüssel gibt.

Das Vorsehen einer individuellen Teilnehmeridentifikation IMSI im Teilnehmeridentitätsmodul, bevor dieses ausgehend von dem nichtindividuellen Geheimschlüssel, vom Mobilfunkserver seinen eigenen individuellen Geheimschlüssel abruft, verhindert zudem eine beliebige Vervielfältigung des Parameterdatensatzes, um gefälschte oder geklonte Teilnehmeridentitätsmodule herzustellen. Bei einem Parameterdatensatz, bei dem sowohl die Teilnehmeridentifikation IMSI als auch der Geheimschlüssel nicht-individuell sind, ist eine Vervielfältigung a priori möglich. Der erfindungsgemäße vorläufige Parameterdatensatz bietet somit verbesserten Schutz und Sicherheit gegen Fälschen oder Klonen von Teilnehmeridentitätsmodulen.

Daher ist gemäß Anspruch 1 ein Verfahren Inbetriebnahme und Personalisierung eines Teilnehmeridentitätsmoduls in einem Mobilfunknetz geschaffen, das sowohl eine möglichst effiziente Produktion der Teilnehmeridentitätsmodule ermöglicht, als auch möglichst hohe Sicherheit bietet.

Nachdem der individuelle, eindeutige endgültige Geheimschlüssels beim Teilnehmeridentitätsmodul empfangen worden ist, wird er in das Teilnehmeridentitätsmodul programmiert, um das Teilnehmeridentitätsmodul mit dem endgültigen individuellen, eindeutigen Parameterdatensatz auszustatten. Das Teilnehmeridentitätsmodul ist nun für den dauerhaften Betrieb im Mobilfunknetz ausgestattet.

Vorzugsweise erlaubt der vorläufige Parameterdatensatz ein Herunterladen eines individuellen Geheimschlüssels in das Teilnehmeridentitätsmodul mittels des Authentisierungs-Zyklus gemäß Schritt b), aber keinen dauerhaften Betrieb des Teilnehmeridentitätsmoduls bzw. eines mit dem Teilnehmeridentitätsmodul ausgestatteten Mobilfunkendgeräts, im Mobilfunknetz. Wahlweise erlaubt der vorläufige Parameterdatensatz nur einen einzigen (erfolgreich vollständig durchgeführten) Authentisierungs-Zyklus gemäß Schritt b), und ist danach nicht mehr verwendbar. Der Authentisierungs-Zyklus gemäß Schritt b) kann wahlweise aus den zwei oben beschriebenen Kommunikationsschritten b1) und b2) zwischen Teilnehmeridentitätsmodul und Mobilfunkserver bestehen. Wie weiter unten beschrieben ist, kann der Authentisierungs-Zyklus alternativ aus vier (oder mehr) Kommunikationsschritten zwischen Teilnehmeridentitätsmodul und Mobilfunkserver bestehen. Insbesondere kann, wie ebenfalls weiter unten beschrieben ist, Kommunikationsschritt b2) mehrere Kommunikations-Teilschritte umfassen, und erst im letzten Kommunikations-Teilschritt wird der endgültige individuelle Geheimschlüssel an das Teilnehmeridentitätsmodul übertragen.

Gemäß manchen, ersten Ausführungsformen der Erfindung wird das Teilnehmeridentitätsmodul bereits in der Produktion mit dem vorläufigen Parameterdatensatz (individuelle Teilnehmeridentifikation IMSI, nicht-individueller Geheimschlüssel (z.B. Gruppenschlüssel)) programmiert.

Gemäß manchen anderen, in dieser Anmeldung auch zweiten genannten, Ausführungsformen der Erfindung, gemäß Anspruch 2, wird das Teilnehmeridentitätsmodul zunächst mit einem initialen Parameterdatensatz programmiert (nicht-individuelle Teilnehmeridentifikation, nicht-individueller Geheimschlüssel (z.B. Gruppenschlüssel)). Der initiale Parameterdatensatz wird vorzugsweise bereits in der Produktion einprogrammiert. Der vorläufige Parameterdatensatz (individuelle Teilnehmeridentifikation IMSI, nicht-individueller Geheimschlüssel (z.B. Gruppenschlüssel)) wird erst in einem vorbereitenden, singulären Authentisierungs-Zyklus in das Teilnehmerideneinprogrammiert

. In diesem singulären Authentisierungs-Zyklus wird zunächst nur die nicht-individuelle Teilnehmeridentifikation durch eine individuelle Teilnehmeridentifikation ersetzt. Nachfolgend erfolgt in einem zweiten singulären Authentisierungs-Zyklus das erfindungsgemäße Ersetzen des nicht-individueller Geheimschlüssels (z.B. Gruppenschlüssel)) durch den individuellen Geheimschlüssel.

Vorzugsweise ermöglicht der initiale Parameterdatensatz dem Teilnehmeridentitätsmodul nur einen einzigen (erfolgreich vollständig durchgeführten) Authentisierungs-Zyklus, in dem eine individuelle Teilnehmeridentifikation vom Mobilfunkserver in das Teilnehmeridentitätsmodul heruntergeladen wird. Zumindest ermöglicht der initiale Parameterdatensatz das Herunterladen einer individuellen Teilnehmeridentifikation vom Mobilfunkserver in das Teilnehmeridentitätsmodul, hingegen keinen dauerhaften Betrieb des Teilnehmeridentitätsmoduls für Authentisierungen im Mobilfunknetz.

Bei einem Verfahren gemäß Anspruch 3, wird im Teilnehmeridentitätsmodul ausgehend von einem initialen, vollkommen nicht-individuellen generischen Parameterdatensatz ein vorläufiger Parameterdatensatz eingerichtet, bei dem die Teilnehmeridentifikation IMSI bereits individuell ist, der Geheimschlüssel hingegen noch nicht. In ein so vorbereitetes Teilnehmeridentitätsmodul kann, insbesondere nachdem der vorläufige Parameterdatensatz auch beim zuständigen Mobilfunkserver registriert ist, erfindungsgemäß ein individueller Geheimschlüssel geladen werden, um das Teilnehmeridentitätsmodul vollständig zu individualisieren und damit fertig zu personalisieren. Speziell werden bei dem Verfahren eine vom Mobilfunkserver empfangene individuelle, eindeutige Teilnehmeridentifikation IMSI und der vorher bereits vorhandene nicht-individuelle, nicht-eindeutige vorläufige Geheimschlüssel zu einem vorläufigen Parameterdatensatz kombiniert. Vorzugsweise wird der vorläufige Parameterdatensatz zudem bei einem Mobilfunkserver registriert. Mittels des vorläufigen Parameterdatensatzes kann - erfindungsgemäß - in einem nachfolgenden Schritt der individuelle, eindeutige endgültige Geheimschlüssel vom Mobilfunkserver in das Teilnehmeridentitätsmodul geladen werden.

Vorzugsweise ermöglicht der initiale Parameterdatensatz nur das Herunterladen der individuellen Teilnehmeridentifikation, und ermöglicht der vorläufige Parameterdatensatz nur das Herunterladen des individuellen Geheimschlüssels. Weder der initiale Parameterdatensatz noch der vorläufige Parameterdatensatz ermöglicht einen dauerhaften Betrieb des Teilnehmeridentitätsmoduls für Authentisierungen im Mobilfunknetz, wie sie beispielsweise bei standardmäßigen Aktivitäten wie Telefonieren und mobilen Datenverbindungen im Mobilfunknetz durchgeführt werden.

Wahlweise umfasst das Verfahren, im Anschluss an einen oder mehrere der Schritte des Empfangens gemäß Schritt b1 und Verifizierens gemäß Schritt b2 (mit Zielsetzung des Versands des individuellen Geheimschlüssel Ki), weiter folgenden Schritt:
- beim Mobilfunkserver: Registrieren des individuellen, eindeutigen endgültigen Geheimschlüssels (Ki) gemäß b2) als dem Teilnehmeridentitätsmodul zugeordneter endgültigen Geheimschlüssel (Ki).

Wahlweise umfasst das Verfahren weiter, im Anschluss an die Schritte des Empfangens gemäß b1 bzw. d1 und positiven Verifizierens gemäß b2 bzw. d2, weiter, beim Mobilfunkserver: das Registrieren der für das Teilnehmeridentitätsmodul individuellen, eindeutigen Teilnehmeridentifikation als dem Teilnehmeridentitätsmodul zugeordnete endgültige eindeutige Teilnehmeridentifikation. Insbesondere ist es also möglich, dass der Mobilfunkserver die individuelle eindeutige Teilnehmeridentifikation IMSI erst dann registriert, wenn sich das Teilnehmeridentitätsmodul erstmalig mit der individuellen, eindeutigen Teilnehmeridentifikation im Mobilfunknetz anmeldet.

Durch den Registrierungsschritt bzw. die Registrierungsschritte wird erreicht, dass das Teilnehmeridentitätsmodul mit seinen individuellen Parametern Teilenehmerkennung IMSI oder/und Geheimschlüssel Ki als bekanntes, registriertes Teilnehmeridentitätsmodul geführt wird. Nur Teilnehmeridentitätsmodule, für die beim Mobilfunkserver ein vollständiger individueller endgültiger Parameterdatensatz registriert ist, können dauerhaft an der Kommunikation im Mobilfunknetz teilnehmen und im Mobilfunknetz Authentisierungen ermöglichen oder durchführen.

Der nicht-individuelle Geheimschlüssel ist seiner Funktion nach ein Gruppenschlüssel für alle Teilnehmeridentitätsmodule, die einen vorläufigen oder initialen Parameterdatensatz mit dem nicht-individuellen Geheimschlüssel enthalten.

Bedarfsweise können für mehrere Gruppen von Teilnehmeridentitätsmodulen mehrere Gruppenschlüssel vorgesehen sein. Gemäß einem einfachen Beispielfall haben alle Teilnehmeridentitätsmodule, die demselben Mobilfunk-Netzbetreiber zugeordnet sind, denselben Gruppenschlüssel. Teilnehmeridentitätsmodule anderer Netzbetreiber haben andere Gruppenschlüssel. Gemäß einem weiteren Beispiel haben alle Teilnehmeridentitätsmodule, die demselben Mobilfunk-Netzbetreiber zugeordnet sind, und die dabei einer bestimmten Charge von Teilnehmeridentitätsmodulen zugeordnet sind, denselben Gruppenschlüssel. Teilnehmeridentitätsmodule desselben Netzbetreibers, die anderen Chargen angehören, haben andere Gruppenschlüssel. Eine Charge kann beispielsweise alle Teilnehmeridentitätsmodule umfassen, die in einem bestimmten Zeitraum (z.B. 1 Woche, 1 Monat, 1 Jahr, etc.) produziert worden sind oder in den Handel gegeben worden sind.

Genauer werden mehrere Gruppen von Teilnehmeridentitätsmodulen bereitgestellt, wobei jede Gruppe eine Vielzahl von Teilnehmeridentitätsmodulen umfasst. Der vorläufige Parameterdatensatz a) enthält als vorläufigen Geheimschlüssel einen vorläufigen Gruppenschlüssel aus einer Mehrzahl von Gruppenschlüsseln. Jeder Gruppe ist ein eigener Gruppenschlüssel aus der Mehrzahl von Gruppenschlüsseln zugewiesen. Der Mobilfunkserver verfügt über alle Gruppenschlüssel aus der Mehrzahl von Gruppenschlüsseln. In diesem Fall enthält die individuelle, eindeutige Teilnehmeridentifikation gemäß a1) und ggf. die identische, nicht-individuelle, nicht-eindeutige initiale Teilnehmeridentifikation gemäß c1) (jeweils) eine Gruppenschlüssel-Information, aus der ableitbar ist, zu welchem Gruppenschlüssel die Teilnehmeridentifikation zugeordnet ist.

Bevor der endgültige individuelle Geheimschlüssel an das Teilnehmeridentitätsmodul gesendet werden darf, wird eine Authentisierungs-Nachricht, die das Teilnehmeridentitätsmodul an den Mobilfunkserver sendet, beim Mobilfunkserver verifiziert. Nur nach positiver Verifizierung darf der endgültige individuelle Geheimschlüssel an das Teilnehmeridentitätsmodul gesendet werden.

Wahlweise umfasst der Schritt b2), Verifizieren der Authentisierungs-Nachricht gemäß vorbestimmten Kriterien, folgende beim Mobilfunkserver durchgeführte Teilschritte: b2-1) Extrahieren des nicht-individuellen, nicht-eindeutigen vorläufigen Geheimschlüssels aus der Authentisierungs-Nachricht; b2-2) Verifizieren des gemäß b2-1) extrahierten nicht-individuellen, nicht-eindeutigen vorläufigen Geheimschlüssels. Kann der extrahierte nicht-individuelle, nicht-eindeutige vorläufige Geheimschlüssel nicht positiv verifiziert werden, so ist dieser Geheimschlüssel kein autorisierter Geheimschlüssel des Mobilfunkservers, und das Teilnehmeridentitätsmodul wird abgewiesen und nicht weiter personalisiert. Wird der vorläufige Geheimschlüssel positiv verifiziert, ist er ein autorisierter Geheimschlüssel des Mobilfunkservers, und die Personalisierung des Teilnehmeridentitätsmoduls wird fortgesetzt.

Wie weiter oben beschrieben, kann der endgültige individuelle Geheimschlüssel unmittelbar in Reaktion auf die positive Verifizierung der Authentisierungs-Nachricht an das Teilnehmeridentitätsmodul gesendet werden. Alternativ wird, nachdem in Schritt b2-2) der extrahierte nicht-individuelle, nicht-eindeutige vorläufige Geheimschlüssel positiv verifiziert wird, zunächst nur die Teilnehmeridentifikation gemäß Merkmal a1) als gültige Teilnehmeridentifikation gewertet und beim Mobilfunkserver als gültige Teilnehmeridentifikation registriert. Damit der endgültige individuelle Geheimschlüssel an das Teilnehmeridentitätsmodul gesendet wird, ist erforderlich, dass das Teilnehmeridentitätsmodul eine weitere, zweite Authentisierungs-Nachricht an den Mobilfunkserver sendet, und dass auch diese weitere, zweite Authentisierungs-Nachricht positiv verifiziert wird. Erst dann sendet der Mobilfunkserver den endgültigen Geheimschlüssel an das Teilnehmeridentitätsmodul.

Hierzu wird, nachdem die als gültig gewertete Teilnehmeridentifikation in Schritt b3) beim Mobilfunkserver registriert worden ist, gemäß Teilschritt b2-4), beim Mobilfunkserver eine mit der individuellen, eindeutigen Teilnehmeridentifikation und dem nicht-individuellen, nicht-eindeutigen vorläufigen Geheimschlüssel gebildete zweite Authentisierungs-Nachricht von dem Teilnehmeridentitätsmodul entgegengenommen. Gemäß Teilschritt b2-5) wird in Reaktion auf die Entgegennahme der zweiten Authentisierungs-Nachricht, beim Mobilfunkserver die zweite Authentisierungs-Nachricht gemäß vorbestimmten Kriterien verifiziert, z.B. nach Kriterien wie sie für die Authentisierungs-Nachricht beschrieben wurden. Im Fall erfolgreicher Authentisierung sendet der Mobilfunkserver den individuellen, eindeutigen endgültigen Geheimschlüssel an das Teilnehmeridentitätsmodul. Abschließend wird der Geheimschlüssel anschließend in das Teilnehmeridentitätsmodul programmiert.

Schritt b2-5), Verifizieren der zweiten Authentisierungs-Nachricht gemäß vorbestimmten Kriterien, umfasst wahlweise folgende beim Mobilfunkserver durchgeführte Teilschritte:
b2-5-1) Extrahieren des nicht-individuellen, nicht-eindeutigen vorläufigen Geheimschlüssels aus der zweiten Authentisierungs-Nachricht;
b2-5-2) Verifizieren des gemäß b2-5-1) extrahierten nicht-individuellen, nicht-eindeutigen vorläufigen Geheimschlüssels;
b2-5-3) Im Fall, dass in Schritt b2-5-2) der extrahierte nicht-individuelle, nicht-eindeutige vorläufige Geheimschlüssel positiv verifiziert wird, Senden des individuellen, eindeutigen endgültigen Geheimschlüssels (Ki) an das Teilnehmeridentitätsmodul, zur Programmierung in das Teilnehmeridentitätsmodul.

Das Authentisieren gemäß Schritt b2-2) bzw. gemäß b2-5-2) wird wahlweise mittels eines Challenge-Response-Verfahrens durchgeführt. Wahlweise folgt das Challenge-Response-Verfahren dabei folgendem Schema:
b2-1) bzw. b2-5-1) Extrahieren des nicht-individuellen, nicht-eindeutigen vorläufigen Geheimschlüssel aus der Authentisierungs-Nachricht;
b2-2) bzw. b2-5-2) Bilden einer Authentisierungs-Challenge unter Verwendung des nicht-eindeutigen vorläufigen Geheimschlüssels und einer Zufallsinformation, insbesondere Zufallszahl oder Pseudo-Zufallszahl;
b2-2-1) bzw. b2-5-2-1) Senden der Authentisierungs-Challenge an das Teilnehmeridentitätsmodul;
b2-2-2) bzw. b2-5-2-2) Empfangen einer, beim Teilnehmeridentitätsmodul unter Verwendung des nicht-eindeutigen vorläufigen Geheimschlüssels und der Zufallsinformation gebildeten, Authentisierungs-Antwort von dem Teilnehmeridentitätsmodul;
b2-3) bzw. b2-5-3) Verifizieren der Authentisierungs-Antwort.

Aus dem Stand der Technik sind weitere ähnliche Challenge-Response-Schemata bekannt.

Das Verfahren umfasst wahlweise ein Registrieren, beim Mobilfunkserver, des individuellen, eindeutigen endgültigen Geheimschlüssels für das Teilnehmeridentitätsmodul, nachdem dieser für das Teilnehmeridentitätsmodul vergeben worden ist, oder nachdem der Geheimschlüssel an das Teilnehmeridentitätsmodul gesendet worden ist.

Der Mobilfunkserver ist gemäß Ausführungsformen der Erfindung eingerichtet, für jede gemäß Schritt b1) in einer Authentisierungs-Nachricht entgegengenommene individuelle, eindeutige Teilnehmeridentifikation das Verifizieren der Authentisierungs-Nachricht gemäß Schritt b2) durchzuführen, insbesondere ohne ein Erfordernis, dass die individuelle, eindeutige Teilnehmeridentifikation bereits beim Mobilfunkserver registriert ist.

Mit anderen Worten akzeptiert der Mobilfunkserver jede eingehende, oder zumindest jede unbekannte, Teilnehmeridentifikation (IMSI), optional ggf. abgesehen von ausdrücklich verbotenen oder gesperrten Teilnehmeridentifikationen. Maßgeblich dafür, ob die Teilnehmeridentifikation vom Mobilfunkserver akzeptiert wird, ist der mit der Teilnehmeridentifikation verwendete Geheimschlüssel. Wird der Geheimschlüssel positiv verifiziert, wird die Teilnehmeridentifikation akzeptiert und beim Mobilfunkserver registriert. Eine Vorab-Registrierung von bereits vergebenen individuellen Teilnehmeridentifikationen ist nicht erforderlich. Hierdurch ist der Verwaltungsaufwand beim Mobilfunkserver reduziert gegenüber Servern mit vorab registrierten individuellen Teilnehmeridentifikationen.

Unter einem Mobilfunkserver wird im Zusammenhang mit der Erfindung ein Server verstanden, der eingerichtet ist, ein oder mehrere Schritte der Personalisierung an einem Teilnehmeridentitätsmodul durchführen zu können. Schritte der Personalisierung sind beispielsweise Senden eines individuellen Gemeinschlüssels oder/und einer individuellen Teilnehmeridentifikation an ein Teilnehmeridentitätsmodul. Im Zusammenhang mit der Personalisierung kann Authentisierung zwischen dem Mobilfunkserver und dem Teilnehmeridentitätsmodul erforderlich sein.

Im Zusammenhang mit der Erfindung kann ein Mobilfunkserver, der in der Produktion verwendet wird, ein anderer Mobilfunkserver sein als ein Mobilfunkserver, der verwendet wird, um ein bereits im Feld befindliches Teilnehmeridentitätsmodul zu personalisieren. Dennoch wird im Zusammenhang mit der Erfindung der Mobilfunkserver stets seiner Funktion nach als der Mobilfunkserver bezeichnet. In der Produktion kann der Mobilfunkserver als klassischer Produktions-Personalisierungsserver gestaltet sein. Im Feld, d.h. wenn das Teilnehmeridentitätsmodul bereits bei einem Kunden (z.B. ein Händler-Kunde, oder alternativ, bevorzugt, ein Endkunden oder Nutzer) in einem Mobilfunkendgerät in Benutzung ist, kann der Mobilfunkserver als Provisionierungs-Server für das Remote Provisioning von SIMs gestaltet sein, z.B. für Remote Provisioning nach Empfehlungen der Mobilfunkvereinigung GSMA (GSMA = GSM Association; GSM = Global System for Mobile Communications).

Der Mobilfunkserver kann als einzelner Server gestaltet sein. Der Mobilfunkserver kann alternativ intern in mehrere Server mit unterschiedlichen Aufgaben strukturiert sein. Beispielsweise kann bei einer Personalisierung eines Teilnehmeridentitätsmoduls, das bereits im Feld in Gebrauch ist, der "Mobilfunkserver" einen Datenaufbereitungsserver (Data Preparation) umfassen, der Personalisierungsdaten für den Versand an ein Teilnehmeridentitätsmodul aufbereitet, und einen sicheren Sendeserver (Secure Router), der aufbereitete Personalisierungsdaten an das Teilnehmeridentitätsmodul sendet, gemäß GSMA Empfehlungen für das Remote Provisioning von SIMs.

Der initiale Parameterdatensatz wird vorzugsweise bei der Produktion des Teilnehmeridentitätsmoduls in das Teilnehmeridentitätsmodul eingebracht, durch einen Mobilfunkserver, der als Personalisierungsserver gestaltet ist, und der sich in einer Produktionsumgebung befindet.

Der vorläufige Parameterdatensatz kann ebenfalls bereits bei Produktion des Teilnehmeridentitätsmoduls in das Teilnehmeridentitätsmodul eingebracht werden, durch einen Personalisierungsserver, der in einer Produktionsumgebung steht. Alternativ, wenn ein initialer Parameterdatensatz verwendet wird, wird dieser in der Produktion in das Teilnehmeridentitätsmodul eingebracht. In diesem Fall wird, ausgehend vom initialen Parameterdatensatz, die individuelle Teilnehmeridentifikation erst in das Teilnehmeridentitätsmodul eingebracht, und damit der vorläufige Parameterdatensatz im Teilnehmeridentitätsmodul eingerichtet, wenn sich das Teilnehmeridentitätsmodul bereits im Feld befindet, bei einem Kunden in einem Mobilfunkendgeräts. In diesem Fall wird der vorläufige Parameterdatensatz vorzugsweise durch einen Provisionierungs-Server im Teilnehmeridentitätsmodul eingerichtet, z.B. durch einem GSMA Provisionierungs-Server, wahlweise auch durch einen Provisionierungs-Server umfassend Data Preparation Server und Secure Router für die Teilaufgaben Datenaufbereitung und Datenübertragung an das Teilnehmeridentitätsmodul.

### Kurze Beschreibung der Zeichnungen

Im Folgenden wird die Erfindung an Hand von Ausführungsbeispielen und unter Bezugnahme auf die Zeichnungen näher erläutert, in der zeigen:
- Fig.: 1 ein System zur Veranschaulichung der Erfindung;
- Fig. 2: Parameterdatensätze, die bei Ausführungsformen des erfindungsgemäßen Verfahrens verwendet werden;
- Fig. 3: Authentisierungs-Zyklen (a), (b) und (c), zum Zweck von (a) Abruf einer individuellen IMSI, (b) Abruf eines individuellen Geheimschlüssels und (c) Normalbetrieb im Mobilfunknetz, mittels Authentisierungs-Nachrichten, die mit Parameterdatensätzen gemäß Fig. 2 gebildet sind, gemäß Ausführungsformen der Erfindung;
- Fig. 4: spezielle Ausführungsformen des in Fig. 3 gezeigten Authentisierungs-Zyklus (b), mit separaten Authentisierungs-Schritten (b1) zur Registrierung eine noch unbekannten IMSI beim Mobilfunkserver und (b2) Abruf des individuellen Geheimschlüssels;
- Fig. 5: eine Mehrzahl von vorläufigen Geheimschlüsseln Ki-G1, Ki-G2, Ki-G3 für mehrere Gruppen 1, 2, 3 von Teilnehmeridentitätsmodulen 1.

### Detaillierte Beschreibung von Ausführungsbeispielen

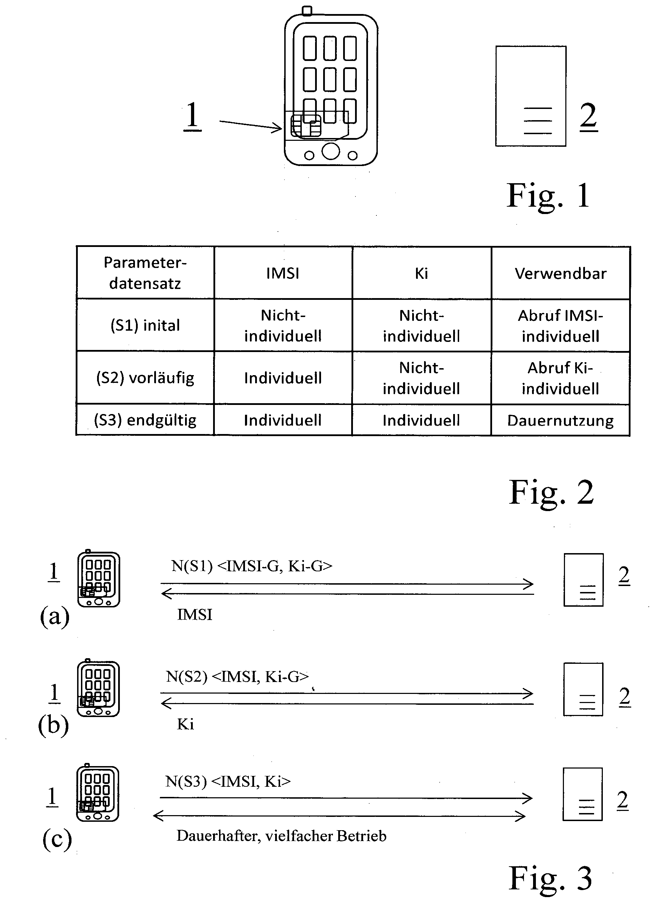

Fig. 1 zeigt ein System zur Veranschaulichung der Erfindung, umfassend ein in einem Mobilfunkendgerät, hier Smartphone, betriebenes Teilnehmeridentitätsmodul 1 und einen Mobilfunkserver 2.

Fig. 2 zeigt Parameterdatensätze, die bei Ausführungsformen des erfindungsgemäßen Verfahrens verwendet werden.

Ein initialer Parameterdatensatz S1 im Zusammenhang mit der Erfindung ist vollständig nicht-individuell und umfasst eine nicht-individuelle Teilnehmeridentifikation IMSI-G (Gruppen-IMSI) und einen nicht-individuellen Geheimschlüssel Ki-G (Gruppenschlüssel), die für eine Vielzahl von Teilnehmeridentitätsmodulen 1 identisch sind. Der initiale Parameterdatensatz S1 ist ausschließlich dazu verwendbar, eine individuelle Teilnehmeridentifikation IMSI in das Teilnehmeridentitätsmodul 1 zu laden. Mittels Abruf einer individuellen Teilnehmeridentifikation IMSI in das Teilnehmeridentitätsmodul 1, ausgehend von einem initialen Parameterdatensatz S1, wird im Teilnehmeridentitätsmodul 1 ein vorläufiger Parameterdatensatz S2 eingerichtet.

Ein vorläufiger Parameterdatensatz S2 im Zusammenhang mit der Erfindung umfasst eine individuelle Teilnehmeridentifikation IMSI und einen nicht-individuellen Geheimschlüssel Ki-G. Der vorläufige Parameterdatensatz S2 ist ausschließlich dazu verwendbar, unter Verwendung der individuellen Teilnehmeridentifikation IMSI einen individuellen Geheimschlüssel Ki in das Teilnehmeridentitätsmodul 1 zu laden. Mittels Abruf eines individuellen Geheimschlüssels Ki in das Teilnehmeridentitätsmodul 1, ausgehend von einem vorläufigen Parameterdatensatz S2, wird im Teilnehmeridentitätsmodul 1 ein endgültiger Parameterdatensatz S3 eingerichtet.

Ein endgültiger Parameterdatensatz S3 im Zusammenhang mit der Erfindung umfasst eine individuelle Teilnehmeridentifikation IMSI und einen individuellen Geheimschlüssel Ki. Erst ein endgültiger Parameterdatensatz S3 ermöglicht einen regulären, dauerhaften Betrieb eines Mobilfunkendgeräts mit dem Teilnehmeridentitätsmodul 1 in Mobilfunknetzen, beispielsweise um Telefonate zu führen, Webseiten im Internet über die Mobilfunkschnittstelle aufzurufen, oder Daten mobil zu übertragen.

Fig. 3 zeigt Authentisierungs-Zyklen (a), (b) und (c), zum Zweck von (a) Abruf einer individuellen IMSI, (b) Abruf eines individuellen Geheimschlüssels und (c) Normalbetrieb im Mobilfunknetz, mittels Authentisierungs-Nachrichten, die mit Parameterdatensätzen gemäß Fig. 2 gebildet sind, gemäß Ausführungsformen der Erfindung. Die Zielsetzung des Austauschs der ersten beiden Authentisierungs-Nachrichten N(S1), N(S2) bzw. Authentisierungs-Zyklen (a), (b) ist, das Teilnehmeridentitätsmodul 1 zu personalisieren, mit zwei getrennten Authentisierungs-Zyklen (a) (Abruf einer individuellen IMSI) und (b) (Abruf eines individuellen Geheimschlüssels Ki). Die Zielsetzung des Austauschs der dritten Authentisierungs-Nachricht ist Authentisierung im normalen Betrieb des Teilnehmeridentitätsmoduls 1 im Mobilfunknetz.

Gemäß Fig. 3 (a) enthält ein noch völlig unpersonalisiertes Teilnehmeridentitätsmodul 1 einen initialen Parameterdatensatz S1, umfassend eine für eine Vielzahl von Teilnehmeridentitätsmodulen identische, nicht-individuelle, nicht-eindeutige initiale Teilnehmeridentifikation IMSI-G (z.B. eine Gruppen-IMSI), und einen für eine Vielzahl von Teilnehmeridentitätsmodulen identischen, nicht-individuellen, nicht-eindeutigen vorläufigen Geheimschlüssel Ki-G (z.B. einen Gruppen-Geheimschlüssel). Sendet ein völlig unpersonalisiertes Teilnehmeridentitätsmodul 1 gemäß Fig. 3(a) eine Authentisierungsnachricht N(S1), an einen Mobilfunkserver 2, so ist die Authentisierungsnachricht N(S1) mit einem initialen Parameterdatensatz S1 gebildet. Der Mobilfunkserver 2 verifiziert die Authentisierungsnachricht N(S1) und sendet nach Durchführung aller vorgeschriebener Schritte eine individuelle Teilnehmeridentifikation IMSI an das Teilnehmeridentitätsmodul 1. Die individuelle Teilnehmeridentifikation IMSI wird in das Teilnehmeridentitätsmodul 1 programmiert.

Nun ist das Teilnehmeridentitätsmodul 1 im Zustand gemäß Fig. 3 (b) und enthält einen vorläufigen Parameterdatensatz S2, umfassend eine individuelle Teilnehmeridentifikation IMSI und einen nicht-individuellen, nicht-eindeutigen vorläufigen Geheimschlüssel Ki-G.

Sendet ein gemäß Fig. 3(b) eingerichtetes Teilnehmeridentitätsmodul 1 eine Authentisierungsnachricht N(S2) an einen Mobilfunkserver 2, so ist die Authentisierungsnachricht N(S2) mit dem vorläufigen Parameterdatensatz S2 gebildet. Der Mobilfunkserver 2 verifiziert die Authentisierungsnachricht N(S2) und sendet nach Durchführung aller vorgeschriebener Schritte einen individuellen Geheimschlüssel Ki an das Teilnehmeridentitätsmodul 1. Der individuelle Geheimschlüssel Ki wird in das Teilnehmeridentitätsmodul 1 programmiert.

Nun ist das Teilnehmeridentitätsmodul 1 im Zustand gemäß Fig. 3 (c) und enthält einen endgültigen Parameterdatensatz S3, umfassend eine individuelle Teilnehmeridentifikation IMSI und einen individuellen, eindeutigen endgültigen Geheimschlüssel Ki. Das Teilnehmeridentitätsmodul 1 ist nun eingerichtet für den Dauerbetrieb im Mobilfunknetz. Authentisierungs-Nachrichten werden nun mit dem endgültigen Parameterdatensatz S3 erstellt und gesendet, mit der individuellen Teilnehmeridentifikation IMSI und dem individuellen, eindeutigen endgültigen Geheimschlüssel Ki.

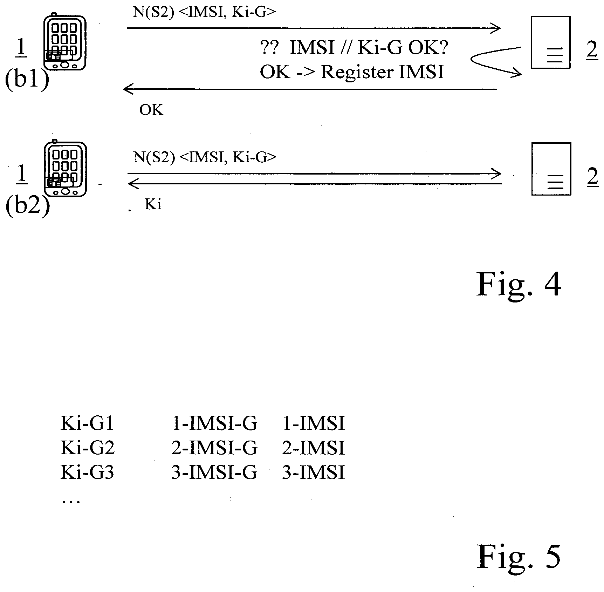

Gemäß Fig. 4 kann der Abruf des Geheimschlüssels Ki ausgehend von einem vorläufigen Parameterdatensatz S2, der eine individuelle, beim Mobilfunkserver 2 noch nicht registrierte Teilnehmeridentifikation IMSI umfasst, und einen nicht-individuellen vorläufigen Geheimschlüssel Ki-G, gemäß Ausführungsformen der Erfindung zwei getrennte Authentisierungs-Schritte (b1) (Registrierung der zunächst noch unbekannten individuellen IMSI) und (b2) (Abruf des individuellen Geheimschlüssels Ki) umfassen. Der in Fig. 4 dargestellte Authentisierungs-Zyklus (b1)+(b2) zum Abruf des Geheimschlüssels Ki ist analog zum in Fig. 3 (b) gezeigten Authentisierungs-Zyklus. Gemäß Fig. 4 (b1) sendet das Teilnehmeridentitätsmodul 1 an einen Mobilfunkserver 2 eine Authentisierungsnachricht N(S2), die gebildet wurde mit der individuellen, beim Mobilfunkserver 2 noch nicht registrierten Teilnehmeridentifikation IMSI und dem nicht-individuellen vorläufigen Geheimschlüssel Ki-G (d.h. mit einem vorläufigen Parameterdatensatz S2). In Reaktion auf den Empfang der Authentisierungsnachricht N(S2) stellt der Mobilfunkserver 2 fest, dass die Teilnehmeridentifikation IMSI unbekannt ist. Weiter verifiziert der Mobilfunkserver 2 den nicht-individuellen vorläufigen Geheimschlüssel Ki-G. Wird der nicht-individuelle vorläufige Geheimschlüssel Ki-G positiv verifiziert, wird der vom Mobilfunkserver 2 als vom Mobilfunkserver autorisierter vorläufiger Geheimschlüssel Ki-G erkannt. In Reaktion auf die positive Verifikation des vorläufigen Geheimschlüssels Ki-G wird die Teilnehmeridentifikation IMSI als von nun an bekannte Teilnehmeridentifikation IMSI beim Mobilfunkserver 2 registriert und das Teilnehmeridentifikation IMSI hierüber informiert (Rückmeldung "OK").

In einen nachfolgenden Schritt sendet das Teilnehmeridentitätsmodul 1 an den Mobilfunkserver 2 eine weitere Authentisierungsnachricht N(S2), die gebildet wurde mit der individuellen, beim Mobilfunkserver 2 inzwischen registrierten Teilnehmeridentifikation IMSI und dem nicht-individuellen vorläufigen Geheimschlüssel Ki-G (d.h. mit einem registrierten vorläufigen Parameterdatensatz S2). In Reaktion auf den Empfang der weiteren Authentisierungsnachricht N(S2) stellt der Mobilfunkserver 2 fest, dass die Teilnehmeridentifikation IMSI bereits registriert ist. Weiter verifiziert der Mobilfunkserver 2 den nicht-individuellen vorläufigen Geheimschlüssel Ki-G. Wird der nicht-individuelle vorläufige Geheimschlüssel Ki-G positiv verifiziert, wird der vom Mobilfunkserver 2 als vom Mobilfunkserver autorisierter vorläufiger Geheimschlüssel Ki-G erkannt. In Reaktion auf die positive Verifikation des vorläufigen Geheimschlüssels Ki-G sendet der Mobilfunkserver 2 den endgültigen Geheimschlüssel Ki an das Teilnehmeridentitätsmodul 1. Zudem wird der endgültige Geheimschlüssel Ki zusammen mit der bereits registrierten Teilnehmeridentifikation IMSI beim Mobilfunkserver 2 registriert, mit dem Ergebnis, dass beim Mobilfunkserver 2 für das Teilnehmeridentitätsmodul 1 nun ein endgültiger Parameterdatensatz, umfassend eine endgültige Teilnehmeridentifikation IMSI und einen endgültigen Geheimschlüssel Ki, registriert ist.

Fig. 5 zeigt beispielhaft eine Mehrzahl von vorläufigen Geheimschlüsseln Ki-G1, Ki-G2, Ki-G3, ..., für mehrere Gruppen 1, 2, 3, ... von Teilnehmeridentitätsmodulen 1. Jede Teilnehmeridentifikation IMSI bzw. IMSI-G hat einen Zusatz, aus dem erkenntlich ist, zu welcher Gruppe eine IMSI gehört. So gehören z.B. nicht-individueller Gruppen- Teilnehmeridentifikation 1-IMSI-G und individueller Einzel- Teilnehmeridentifikation 1-IMSI zu Gruppe 1 mit Gruppen-Geheimschlüssel Ki-G1. 2-IMSI-G und 2-IMSI gehören zu Gruppe 2 mit Gruppen-Geheimschlüssel Ki-G2. 3-IMSI-G und 3-IMSI gehören zu Gruppe 3 mit Gruppen-Geheimschlüssel Ki-G3.

## Patentansprüche

1. Verfahren zur Inbetriebnahme und Personalisierung eines Teilnehmeridentitätsmoduls (1) in einem Mobilfunknetz, bei dem das Teilnehmeridentitätsmodul (1) vor seiner erstmaligen Inbetriebnahme im Mobilfunknetz noch keinen individuellen, eindeutigen Parameterdatensatz (S3), umfassend zumindest eine individuelle Teilnehmeridentifikation (IMSI) und einen individuellen Geheimschlüssel (Ki), enthält, und erst nach oder anlässlich seiner erstmaligen Inbetriebnahme im Mobilfunknetz mit einem individuellen, eindeutigen Parameterdatensatz (S3) ausgestattet wird,
**gekennzeichnet durch die Schritte:**
a) Bereitstellen eines Teilnehmeridentitätsmoduls (1), das einen vorläufigen Parameterdatensatz (S2) enthält, der umfasst:
a1) eine für das Teilnehmeridentitätsmodul (1) individuelle, eindeutige Teilnehmeridentifikation (IMSI), und
a2) einen für eine Vielzahl von Teilnehmeridentitätsmodulen (1) identischen, nicht-individuellen, nicht-eindeutigen vorläufigen Geheimschlüssel (Ki-G);
b) Bereitstellen eines Mobilfunkservers (2), der über den nicht-individuellen, nicht-eindeutigen vorläufigen Geheimschlüssel (Ki-G) verfügt, und beim Mobilfunkserver (2), Durchführen der Schritte:
b1) Entgegennehmen einer mit der individuellen, eindeutigen Teilnehmeridentifikation (IMSI) und dem nicht-individuellen, nicht-eindeutigen vorläufigen Geheimschlüssel (Ki-G) gebildeten Authentisierungs-Nachricht (N(S2)) von dem Teilnehmeridentitätsmodul (1);
b2) in Reaktion auf die Entgegennahme der Authentisierungs-Nachricht (N(S2)), Verifizieren der Authentisierungs-Nachricht (N(S2)) gemäß vorbestimmten Kriterien, und im Fall erfolgreichen Verifizierens der Authentisierungs-Nachricht (N(S2)), Senden eines individuellen, eindeutigen endgültigen Geheimschlüssels (Ki) an das Teilnehmeridentitätsmodul (1), zur Programmierung in das Teilnehmeridentitätsmodul (1).

2. Verfahren nach Anspruch 1, weiter umfassend die Schritte:
vor Schritt a):
c) Bereitstellen eines Teilnehmeridentitätsmoduls (1), das einen initialen Parameterdatensatz (S1) enthält, der enthält:
c1) eine für eine Vielzahl von Teilnehmeridentitätsmodulen (1) identische, nicht-individuelle, nicht-eindeutige initiale Teilnehmeridentifikation (IMSI-G), und
c2) den für eine Vielzahl von Teilnehmeridentitätsmodulen (1) identischen, nicht-individuellen, nicht-eindeutigen vorläufigen Geheimschlüssel (Ki-G);
d) bei dem Mobilfunkserver:
d1) Entgegennehmen einer mit der nicht-individuellen, nicht-eindeutigen initialen Teilnehmeridentifikation (IMSI-G) und dem nicht-individuellen, nicht-eindeutigen vorläufigen Geheimschlüssel (Ki-G) gebildeten initialen Authentisierungs-Nachricht (N(S1)) von dem Teilnehmeridentitätsmodul (1);
d2) in Reaktion auf die Entgegennahme der initialen Authentisierungs-Nachricht (N(S1)), Verifizieren der initialen Authentisierungs-Nachricht (N(S1)) gemäß vorbestimmten Kriterien, und im Fall erfolgreichen Verifizierens der Authentisierungs-Nachricht (N(S2)), Senden der für das Teilnehmeridentitätsmodul (1) individuellen, eindeutigen Teilnehmeridentifikation (IMSI) gemäß a1) an das Teilnehmeridentitätsmodul (1), zur Programmierung in das Teilnehmeridentitätsmodul (1);
d3) Programmieren der individuellen, eindeutigen Teilnehmeridentifikation (IMSI) a1) in das Teilnehmeridentitätsmodul (1), und damit Einrichten des vorläufigen Parameterdatensatzes (S2) gemäß a) im Teilnehmeridentitätsmodul (2).

3. Verfahren nach Anspruch 2, umfassend den weiteren Schritt:
e) Kombinieren, zumindest im Teilnehmeridentitätsmodul (1), der individuellen, eindeutigen Teilnehmeridentifikation (IMSI) und des nicht-individuellen, nicht-eindeutigen vorläufigen Geheimschlüssels (Ki-G) zu einem vorläufigen Parameterdatensatz (S2), der dazu eingerichtet ist, in einem nachfolgenden Schritt ein Senden eines individuellen, eindeutigen endgültigen Geheimschlüssels (Ki) an das Teilnehmeridentitätsmodul (1), zur Programmierung in das Teilnehmeridentitätsmodul (1), zu veranlassen.

4. Verfahren nach einem der Ansprüche 1 bis 3, weiter umfassend den Schritt: b3) Programmieren des individuellen, eindeutigen endgültigen Geheimschlüssels (Ki) in das Teilnehmeridentitätsmodul (1), um das Teilnehmeridentitätsmodul (1) mit dem individuellen, eindeutigen Parameterdatensatz (S3) auszustatten.

5. Verfahren nach einem der Ansprüche 1 bis 4, wobei der vorläufige Parameterdatensatz (S2) gemäß a)
- nur einen einzigen Authentisierungsvorgang mit dem Teilnehmeridentitätsmodul (1) mittels einer Authentisierungs-Nachricht (S2) ermöglicht; oder/und
- lediglich das Senden des individuellen, eindeutigen endgültigen Geheimschlüssels (Ki) an das Teilnehmeridentitätsmodul (1) ermöglicht, nicht aber eine vielmalige oder dauerhafte Nutzung des Teilnehmeridentitätsmodul (1) zum Senden von Authentisierungs-Nachrichten (N(S3)).

6. Verfahren nach einem der Ansprüche 1 bis 5, im Anschluss an die Schritte des Empfangens gemäß b1 bzw. d1 und positiven Verifizierens gemäß b2 bzw. d2, weiter umfassend:
- beim Mobilfunkserver (2): Registrieren der für das Teilnehmeridentitätsmodul (1) individuellen, eindeutigen Teilnehmeridentifikation (IMSI) als dem Teilnehmeridentitätsmodul (1) zugeordnete endgültigen eindeutige Teilnehmeridentifikation (IMSI).

7. Verfahren nach einem der Ansprüche 1 bis 6,
- wobei mehrere Gruppen von Teilnehmeridentitätsmodulen bereitgestellt werden, wobei jede Gruppe eine Vielzahl von Teilnehmeridentitätsmodulen (1) umfasst,
- wobei der vorläufige Parameterdatensatz (S2) a) als vorläufigen Geheimschlüssel (Ki-G) einen vorläufigen Gruppenschlüssel aus einer Mehrzahl von Gruppenschlüsseln enthält,
- wobei jeder Gruppe ein eigener Gruppenschlüssel (Ki-G) aus der Mehrzahl von Gruppenschlüsseln zugewiesen ist,
- wobei der Mobilfunkserver (2) über alle Gruppenschlüssel (Ki-G) aus der Mehrzahl von Gruppenschlüsseln verfügt, und
- wobei die individuelle, eindeutige Teilnehmeridentifikation (IMSI) gemäß a1) und ggf. die identische, nicht-individuelle, nicht-eindeutige initiale Teilnehmeridentifikation (IMIS-G) gemäß c1) eine Gruppenschlüssel-Information enthält, aus der ableitbar ist, zu welchem Gruppenschlüssel (Ki-G) die Teilnehmeridentifikation (IMSI) zugeordnet ist.

8. Verfahren nach einem der Ansprüche 1 bis 7, wobei der Schritt b2), Verifizieren der Authentisierungs-Nachricht (N(S1); N(S2)) gemäß vorbestimmten Kriterien, folgende beim Mobilfunkserver (2) durchgeführte Teilschritte umfasst:
b2-1) Extrahieren des nicht-individuellen, nicht-eindeutigen vorläufigen Geheimschlüssels (Ki-G) aus der Authentisierungs-Nachricht (N(S1); N(S2));
b2-2) Verifizieren des gemäß b2-1) extrahierten nicht-individuellen, nicht-eindeutigen vorläufigen Geheimschlüssels (Ki-G).

9. Verfahren nach einem Anspruch 8, weiter umfassend den Schritt:
b2-3) Im Fall, dass in Schritt b2-2) der extrahierte nicht-individuelle, nicht-eindeutige vorläufige Geheimschlüssel (Ki-G) positiv verifiziert wird, Werten der Teilnehmeridentifikation (IMSI) gemäß Merkmal a1) als gültige Teilnehmeridentifikation (IMSI),
b3-4) Registrieren der gemäß Schritt b2-3) als gültig gewerteten Teilnehmeridentifikation (IMSI) beim Mobilfunkserver (2) als gültige Teilnehmeridentifikation (IMSI).

10. Verfahren nach Anspruch 9, wobei Schritt b2) weiter die beim Mobilfunkserver (2) durchgeführten Schritte umfasst:
b2-4) nach Schritt b3) des Registrierens der als gültig gewerteten Teilnehmeridentifikation (IMSI) beim Mobilfunkserver (2): Entgegennehmen einer mit der individuellen, eindeutigen Teilnehmeridentifikation (IMSI) und dem nicht-individuellen, nicht-eindeutigen vorläufigen Geheimschlüssel (Ki-G) gebildeten zweiten Authentisierungs-Nachricht (N(S2)) von dem Teilnehmeridentitätsmodul (1),
b2-5) in Reaktion auf die Entgegennahme der zweiten Authentisierungs-Nachricht (N(S2)), Verifizieren der zweiten Authentisierungs-Nachricht (N(S2)) gemäß vorbestimmten Kriterien, und im Fall erfolgreichen Verifizierens der Authentisierungs-Nachricht (N(S2))g, Senden des individuellen, eindeutigen endgültigen Geheimschlüssels (Ki) an das Teilnehmeridentitätsmodul (1), zur Programmierung in das Teilnehmeridentitätsmodul (1).

11. Verfahren nach Anspruch 10, wobei der Schritt b2-5), Verifizieren der zweiten Authentisierungs-Nachricht (N(S2)) gemäß vorbestimmten Kriterien, folgende beim Mobilfunkserver (2) durchgeführte Teilschritte umfasst:
b2-5-1) Extrahieren des nicht-individuellen, nicht-eindeutigen vorläufigen Geheimschlüssels (Ki-G) aus der zweiten Authentisierungs-Nachricht (N(S2));
b2-5-2) Verifizieren des gemäß b2-5-1) extrahierten nicht-individuellen, nicht-eindeutigen vorläufigen Geheimschlüssels (Ki-G);
b2-5-3) Im Fall, dass in Schritt b2-5-2) der extrahierte nicht-individuelle, nicht-eindeutige vorläufige Geheimschlüssel (Ki-G) positiv verifiziert wird, Senden des individuellen, eindeutigen endgültigen Geheimschlüssels (Ki) an das Teilnehmeridentitätsmodul (1), zur Programmierung in das Teilnehmeridentitätsmodul (1).

12. Verfahren nach einem der Ansprüche 8 bis 11, wobei das Authentisieren gemäß Schritt b2-2) bzw. gemäß b2-5-2) mittels eines Challenge-Response-Verfahrens durchgeführt wird.

13. Verfahren nach einem der Ansprüche 1 bis 11, weiter umfassend den Schritt:
- Registrieren, beim Mobilfunkserver (2), des individuellen, eindeutigen endgültigen Geheimschlüssels (Ki) als dem Teilnehmeridentitätsmodul (1) zugeordneter individueller, eindeutiger endgültiger Geheimschlüssel (Ki).

14. Verfahren nach einem der Ansprüche 1 bis 13, wobei der Mobilfunkserver (2) eingerichtet ist, für jede gemäß Schritt b1) in einer Authentisierungs-Nachricht (N(S2)) entgegengenommene individuelle, eindeutige Teilnehmeridentifikation (IMSI) das Verifizieren der Authentisierungs-Nachricht (N(S2)) gemäß Schritt b2) durchzuführen, insbesondere ohne ein Erfordernis, dass die individuelle, eindeutige Teilnehmeridentifikation (IMSI) bereits beim Mobilfunkserver (2) registriert ist.

## Claims

1. A method for commissioning and personalizing a subscriber identity module (1) in a mobile communications network, in which the subscriber identity module (1), prior to its first-time commissioning in the mobile communications network, does not yet contain an individual, unique parameter data set (S3), comprising at least an individual subscriber identification (IMSI) and an individual secret key (Ki), and is equipped with an individual, unique parameter data set (S3) only after or on the occasion of its first-time commissioning in the mobile communications network,
**characterized by the steps of:**
a) supplying a subscriber identity module (1) which contains a provisional parameter data set (S2) which comprises:
a1) a unique subscriber identification (IMSI) individual to the subscriber identity module (1), and
a2) a non-individual, non-unique provisional secret key (Ki-G) identical for a plurality of subscriber identity modules (1); b) supplying a mobile communications server (2) which has the non-individual, non-unique provisional secret key (Ki-G) and, at the mobile communications server (2), performing the steps of:
b1) accepting from the subscriber identity module (1) an authentication message (N(S2)) formed with the individual, unique subscriber identification (IMSI) and the non-individual, non-unique provisional secret key (Ki-G);
b2) in response to the acceptance of the authentication message (N(S2)), verifying the authentication message (N(S2)) in accordance with predetermined criteria, and, in the event of successfully verifying the authentication message (N(S2)), sending an individual, unique final secret key (Ki) to the subscriber identity module (1) for programming into the subscriber identity module (1).

2. The method according to claim 1, further comprising the steps of: prior to step a):
c) supplying a subscriber identity module (1) which contains an initial parameter data set (S1) which contains:
c1) a non-individual, non-unique initial subscriber identification (IMSI-G) identical for a plurality of subscriber identity modules (1), and
c2) the non-individual, non-unique provisional secret key (Ki-G) identical for a plurality of subscriber identity modules (1); d) at the mobile communications server:
d1) accepting from the subscriber identity module (1) an initial authentication message (N(S1)) formed with the non-individual, non-unique initial subscriber identification (IMSI-G) and the non-individual, non-unique provisional secret key (Ki-G); d2) in response to the acceptance of the initial authentication message (N(S1)), verifying the initial authentication message (N(S1)) in accordance with predetermined criteria, and in the event of successfully verifying the authentication message (N(S2)), sending the unique subscriber identification (IMSI) individual to the subscriber identity module (1) in accordance with a1) to the subscriber identity module (1) for programming into the subscriber identity module (1);
d3) programming the individual, unique subscriber identification (IMSI) a1) into the subscriber identity module (1), and thus setting up the provisional parameter data set (S2) in accordance with a) in the subscriber identity module (2).

3. The method according to claim 2, comprising the further step of:
e) combining, at least in the subscriber identity module (1), the individual, unique subscriber identification (IMSI) and the non-individual, non-unique provisional secret key (Ki-G) into a provisional parameter data set (S2), which is set up to initiate, in a subsequent step, a sending of an individual, unique final secret key (Ki) to the subscriber identity module (1) for programming into the subscriber identity module (1).

4. The method according to any of claims 1 to 3, further comprising the step of: b3) programming the individual, unique final secret key (Ki) into the subscriber identity module (1) in order to equip the subscriber identity module (1) with the individual, unique parameter data set (S3).

5. The method according to any of claims 1 to 4, wherein the provisional parameter data set (S2) in accordance with a)
- enables only a single authentication process with the subscriber identity module (1) by means of an authentication message (S2); or/and
- merely the sending of the individual, unique final secret key (Ki) to the subscriber identity module (1), but not a repeated or permanent utilization of the subscriber identity module (1) for sending authentication messages (N(S3)).

6. The method according to any of claims 1 to 5, subsequent to the steps of receiving in accordance with b1 or d1 and positively verifying in accordance with b2 or d2, further comprising:
- at the mobile communications server (2): registering the unique subscriber identification (IMSI) individual to the subscriber identity module (1) as the final unique subscriber identification (IMSI) associated with the subscriber identity module (1).

7. The method according to any of claims 1 to 6,
- wherein several groups of subscriber identity modules are supplied, wherein each group comprises a plurality of subscriber identity modules (1),
- wherein the provisional parameter data set (S2) contains a) as provisional secret key (Ki-G) a provisional group key from a majority of group keys,
- wherein each group is assigned its own group key (Ki-G) from the majority of group keys,
- wherein the mobile communications server (2) has all group keys (Ki-G) from the majority of group keys, and
- wherein the individual, unique subscriber identification (IMSI) in accordance with a1), and optionally the identical, non-individual, non-unique initial subscriber identification (IMIS-G) in accordance with c1), contains a group key information from which it is derivable which group key (Ki-G) the subscriber identification (IMSI) is associated with.

8. The method according to any of claims 1 to 7, wherein the step b2), verifying the authentication message (N(S1); N(S2)) in accordance with predetermined criteria, comprises the following substeps carried out at the mobile communications server (2):
b2-1) extracting the non-individual, non-unique provisional secret key (Ki-G) from the authentication message (N(S1); N(S2)); b2-2) verifying the non-individual, non-unique provisional secret key (Ki-G) extracted in accordance with b2-1).

9. The method according to claim 8, further comprising the step of: b2-3) in the event that in step b2-2) the extracted non-individual, non-unique provisional secret key (Ki-G) is positively verified, rating the subscriber identification (IMSI) in accordance with feature a1) as a valid subscriber identification (IMSI),
b3-4) registering at the mobile communications server (2) the subscriber identification (IMSI) evaluated as valid in accordance with step b2-3) as a valid subscriber identification (IMSI).

10. The method according to claim 9, wherein step b2) further comprises the steps performed at the mobile communications server (2):
b2-4) after step b3), the registering of the subscriber identification (IMSI) evaluated as valid at the mobile communications server (2): accepting from the subscriber identity module (1) a second authentication message (N(S2)) formed with the individual, unique subscriber identification (IMSI) and the non-individual, non-unique provisional secret key (Ki-G),
b2-5) in response to the acceptance of the second authentication message (N(S2)), verifying the second authentication message (N(S2)) in accordance with predetermined criteria, and in the event of successfully verifying the authentication message (N(S2)), sending the individual, unique final secret key (Ki) to the subscriber identity module (1) for programming into the subscriber identity module (1).

11. The method according to claim 10, wherein the step b2-5), verifying the second authentication message (N(S2)) in accordance with predetermined criteria, comprises the following substeps carried out at the mobile communications server (2): b2-5-1) extracting the non-individual, non-unique provisional secret key (Ki-G) from the second authentication message (N(S2));
b2-5-2) verifying the non-individual, non-unique provisional secret key (Ki-G) extracted in accordance with b2-5-1);
b2-5-3) In the event that in step b2-5-2) the extracted non-individual, non-unique provisional secret key (Ki-G) is positively verified, sending the individual, unique final secret key (Ki) to the subscriber identity module (1) for programming into the subscriber identity module (1).

12. The method according to any of claims 8 to 11, wherein the authenticating in accordance with step b2-2) or in accordance with b2-5-2) is carried out by means of a challenge-response method.

13. The method according to any of claims 1 to 11, further comprising the step of:
- registering, at the mobile communications server (2), the individual, unique final secret key (Ki) as an individual, unique final secret key (Ki) associated with the subscriber identity module (1).

14. The method according to any of claims 1 to 13, wherein the mobile communications server (2) is set up to carry out the verifying of the authentication message (N(S2)) in accordance with step b2) for each individual, unique subscriber identification (IMSI) accepted in an authentication message (N(S2)) in accordance with step b1), in particular without a requirement that the individual, unique subscriber identification (IMSI) is already registered with the mobile communications server (2).

## Revendications

1. Procédé de mise en service et de personnalisation d'un module d'identité d'abonné (1) dans un réseau radio mobile, dans lequel le module d'identité d'abonné (1), avant sa première mise en service dans le réseau radio mobile, ne contient pas encore de jeu de données paramétriques (S3) univoque individuel comportant au moins une identification individuelle d'abonné (IMSI) et une clé secrète individuelle (Ki), et n'est doté d'un jeu de données paramétriques (S3) univoque individuel qu'après ou qu'à l'occasion de sa première mise en service dans le réseau radio mobile,
**caractérisé par les étapes** :
a) mise à disposition d'un module d'identité d'abonné (1) contenant un jeu de données paramétriques (S2) provisoire, lequel comprend :
a1) une identification d'abonné (IMSI) univoque individuelle au module d'identité d'abonné (1), et
a2) une clé secrète (Ki-G) provisoire non univoque, non individuelle, identique pour une pluralité de modules d'identité d'abonné (1) ;
b) mise à disposition d'un serveur de radio mobile (2) disposant d'une clé secrète (Ki-G) provisoire non univoque, non individuelle, et, au serveur de radio mobile (2), exécution des étapes :
b1) réceptionnement d'un message d'authentification (N(S2)) constitué avec l'identification d'abonné (IMSI) univoque individuelle et avec la clé secrète (Ki-G) provisoire non univoque, non individuelle, par le module d'identité d'abonné (1) ;
b2) en réaction au réceptionnement du message d'authentification (N(S2)), vérification du message d'authentification (N(S2)) suivant des critères prédéterminés, et, dans le cas d'une vérification aboutie du message d'authentification (N(S2)), envoi d'une clé secrète individuelle (Ki) univoque définitive au module d'identité d'abonné (1), pour la programmation dans le module d'identité d'abonné (1).

2. Procédé selon la revendication 1, comprenant en outre les étapes :
avant l'étape a) :
c) mise à disposition d'un module d'identité d'abonné (1) contenant un jeu de données paramétriques (S1) initial, lequel contient :
c1) une identification d'abonné (IMSI-G) initiale non univoque, non individuelle, identique pour une pluralité de modules d'identité d'abonné (1), et
c2) la clé secrète (Ki-G) provisoire non univoque, non individuelle, identique pour une pluralité de modules d'identité d'abonné (1),
d) au serveur de radio mobile :
d1) réceptionnement d'un message d'authentification (N(S1)) initial constitué avec l'identification d'abonné (IMSI-G) initiale non univoque, non individuelle et avec la clé secrète (Ki-G) provisoire non univoque, non individuelle, par le module d'identité d'abonné (1) ;
d2) en réaction au réceptionnement du message d'authentification (N(S1)) initial, vérification du message d'authentification (N(S1)) initial suivant des critères prédéterminés, et, dans le cas d'une vérification aboutie du message d'authentification (N(S2)), envoi de l'identification d'abonné (IMSI) univoque, individuelle au module d'identité d'abonné (1), suivant a1) au module d'identité d'abonné (1), pour la programmation dans le module d'identité d'abonné (1) ;
d3) programmation de l'identification d'abonné (IMSI) univoque individuelle dans le module d'identité d'abonné (1), et ainsi mise en place du jeu de données paramétriques (S2) provisoire suivant a) dans le module d'identité d'abonné (2).

3. Procédé selon la revendication 2, comprenant l'autre étape :
e) combinaison, au moins dans le module d'identité d'abonné (1), de l'identification d'abonné (IMSI) univoque individuelle et de la clé secrète (Ki-G) provisoire non univoque, non individuelle, de manière à obtenir un jeu de données paramétriques (S2) provisoire conçu pour, dans une étape subséquente, déclencher un envoi d'une clé secrète individuelle (Ki) univoque définitive au module d'identité d'abonné (1) pour la programmation dans le module d'identité d'abonné (1).

4. Procédé selon une des revendications de 1 à 3, comprenant en outre l'étape : b3) programmation de la clé secrète (Ki) univoque individuelle définitive dans le module d'identité d'abonné (1) afin de doter le module d'identité d'abonné (1) du jeu de données paramétriques (S3) univoque individuel.

5. Procédé selon une des revendications de 1 à 4, cependant que le jeu de données paramétriques (S2) provisoire, selon a),
- ne permet qu'un seul processus d'authentification avec le module d'identité d'abonné (1) au moyen d'un message d'authentification (S2) ; et/ou
- ne permet que l'envoi de la clé secrète (Ki) univoque individuelle définitive au module d'identité d'abonné (1), mais pas une utilisation multiple ou durable du module d'identité d'abonné (1) pour l'envoi de messages d'authentification (N(S3)).

6. Procédé selon une des revendications de 1 à 5, comprenant en outre à la suite des étapes de la réception suivant b1 ou d1 et de la vérification positive suivant b2 ou d2 :
- au serveur de radio mobile (2) : enregistrement de l'identification d'abonné (IMSI) univoque individuelle au module d'identité d'abonné (1), en tant qu'identification d'abonné (IMSI) univoque définitive affectée au module d'identité d'abonné (1).

7. Procédé selon une des revendications de 1 à 6,
- cependant que plusieurs groupes de modules d'identité d'abonné sont mis à disposition, cependant que chaque groupe comprend une pluralité de modules d'identité d'abonné (1),
- cependant que le jeu de données paramétriques (S2) provisoire contient en tant que clé secrète (Ki-G) provisoire une clé de groupe provisoire depuis une pluralité de clés de groupe,
- cependant que, à chaque groupe, une propre clé de groupe (Ki-G) est assignée à partir de la pluralité de clés de groupe,
- cependant que le serveur de radio mobile (2) dispose de toutes les clés de groupe (Ki-G) de la pluralité de clés de groupe, et
- cependant que l'identification d'abonné (IMSI) univoque individuelle suivant a1) et éventuellement l'identification d'abonné (IMSI-G) initiale non univoque, non individuelle, identique selon c1) contient une information de clé de groupe à partir de laquelle il peut être déduit à quelle clé de groupe (Ki-G) l'identification d'abonné (IMSI) est affectée.

8. Procédé selon une des revendications de 1 à 7, cependant que, à l'étape b2), la vérification du message d'authentification (N(S1); N(2)) suivant des critères prédéterminés comprend les étapes partielles suivantes exécutées au serveur de radio mobile (2) :
b2-1) extraction, depuis le message d'authentification (N(S1); N(2)), de la clé secrète (Ki-G) provisoire, non univoque, non individuelle ;
b2-2) vérification de la clé secrète (Ki-G) provisoire, non univoque, non individuelle extraite suivant b2-1).

9. Procédé selon la revendication 8, comprenant en outre l'étape :
b2-3) dans le cas où, à l'étape b2-2), la clé secrète (Ki-G) provisoire, non univoque, non individuelle extraite est vérifiée positivement, évaluation de l'identification d'abonné (IMSI) suivant la caractéristique a1) comme identification d'abonné (IMSI) valable,
b3-4) enregistrement, au serveur de radio mobile (2), de l'identification d'abonné (IMSI) estimée valable suivant l'étape b2-3), en tant qu'identification d'abonné (IMSI) valable.

10. Procédé selon la revendication 9, cependant que l'étape b2) comprend en outre les étapes exécutées au serveur de radio mobile (2) :
b2-4) après l'étape b3) de l'enregistrement, au serveur de radio mobile (2), de l'identification d'abonné (IMSI) estimée valable : réceptionnement d'un deuxième message d'authentification (N(S2)) constitué avec l'identification d'abonné (IMSI) initiale univoque individuelle et avec la clé secrète (Ki-G) provisoire non univoque, non individuelle, par le module d'identité d'abonné (1),
b2-5) en réaction au réceptionnement du deuxième message d'authentification (N(S2)), vérification du deuxième message d'authentification (N(S2)) suivant des critères prédéterminés, et, dans le cas d'une vérification aboutie du message d'authentification (N(S2)), envoi de la clé secrète (Ki) univoque individuelle définitive au module d'identité d'abonné (1), pour la programmation dans le module d'identité d'abonné (1).

11. Procédé selon la revendication 10, cependant que l'étape b2-5), vérification du deuxième message d'authentification (N(S2)) suivant des critères prédéterminés, comprend les étapes partielles suivantes exécutées au serveur de radio mobile (2) :
b2-5-1) extraction, depuis le deuxième message d'authentification (N(S2)), de la clé secrète (Ki-G) provisoire, non univoque, non individuelle,
b2-5-2) vérification de la clé secrète (Ki-G) provisoire, non univoque, non individuelle extraite suivant b2-5-1) ;
b2-5-3) dans le cas où, à l'étape b2-5-2), la clé secrète (Ki-G) provisoire, non univoque, non individuelle extraite est vérifiée positivement, envoi de la clé secrète (Ki) univoque individuelle définitive au module d'identité d'abonné (1), pour la programmation dans le module d'identité d'abonné (1).

12. Procédé selon une des revendications de 8 à 11, cependant que l'authentification est exécutée suivant l'étape b2-2) ou au suivant b2-5-2) au moyen d'un procédé challenge/response.

13. Procédé selon une des revendications de 1 à 11, comprenant en outre l'étape :
- enregistrement, au serveur de radio mobile (2), de la clé secrète (Ki) univoque individuelle définitive comme clé secrète (Ki) univoque individuelle définitive affectée au module d'identité d'abonné (1).

14. Procédé selon une des revendications de 1 à 13, cependant que le serveur de radio mobile (2) est configuré de manière à, pour chaque identification d'abonné (IMSI) univoque individuelle réceptionnée suivant l'étape b1) dans un message d'authentification (N(S2)), exécuter suivant l'étape b2) la vérification du message d'authentification (N(S2)), en particulier sans un besoin que l'identification d'abonné (IMSI) univoque individuelle définitive soit déjà enregistrée au serveur de radio mobile (2).
